# EUROPEAN PATENT SPECIFICATION

(11) **EP 0 557 313 B1**
(45) Date of publication and mention of the grant of the patent: **30.07.1997**
(21) Application number: 91918711.2
(22) Date of filing: 05.11.1991
(51) Int. Cl.: H04N 5/45

(54) **TELEVISION RECEIVER INCLUDING A PICTURE-IN-PICTURE PROCESSOR**
FERNSEHEMPFANGER MIT BILD-IM-BILD PROZESSOR
TELEVISEUR COMPRENANT UN PROCESSEUR D'IMAGE-DANS-L'IMAGE

(30) Priority: 14.11.1990 GB 9024706
(43) Date of publication of application: 01.09.1993
(73) Proprietor: THOMSON multimedia Sales UK Limited, Enfield, Middlesex EN1 1ND (GB)
(72) Inventor: VIZER, David, Michael, D-7730 Villingen-Schwenningen (DE)
(74) Representative: Hartnack, Wolfgang, Dipl.-Ing.
(86) International application number: EP9102084
(87) International publication number: WO9209170

(56) References cited:
- EP-A- 0 409 562
- US-A- 4 682 234
- US-A- 4 729 027
- US-A- 4 959 719

## Description

The invention relates to a television receiver including a PIP processor. This invention is described in terms of the MAC and PAL systems but is equally applicable to any two different composite or component television systems. Within a television receiver with PIP (picture in picture) reproduction a first video signal which may be received by an antenna is used for displaying the so-called main picture on the screen of the picture tube. Additionally a second video signal which may come from a second antenna via a second tuner or from any other video source connected to the receiver is used for additionally displaying a so-called sub-picture constituting a small picture inserted into the main picture. The second video signal is fed to a so-called PIP processor modifying the video signal for production of the small sub-picture. Said processor essentially includes memory circuits for selecting special lines and time compressing the video signals of said lines.

On the other hand there are television receivers having additionally to the normal circuits a special decoder for decoding special or encrypted signals. One example for such a special signal is the MAC signal. In case said MAC signal shall be used for the small sub-picture then the PIP processor additionally to its normal PIP functions has to decode the MAC signal. In this case, therefore, the PIP processor becomes rather complicated and expensive.

It is an object of the invention to modify the television receiver in such a way that even in case the special encoded or encrypted signal is used for the sub-picture the PIP processor does not need an additional encoder for said special signal.

According to the invention within a television receiver including a PIP processor and an extra decoder for specific coded or encrypted signals said decoder having outputs used for picture reproduction and further being connected to inputs of an encoder having Y/C and/or CVBS outputs being connected to output terminals of the receiver dedicated for connecting a video recorder thereto switching means are provided for connecting said Y/C or CVBS output to the input of said PIP processor.

The invention, therefore, makes use of an encoder preferably a PAL encoder provided within the television receiver for furnishing signals for an external video recorder connected to the receiver for simplifying the PIP processor in case a special signal like a MAC signal or an encrypted signal is intended to be used for displaying the small sub-picture. By this way it is achieved that the decoder for the special signal must be provided only once within the receiver whereas the PIP processor itself does not need the specific decoder. In other words, an output terminal of the receiver dedicated for connecting a video recorder to the receiver is fed back into the receiver for additionally feeding the PIP processor in case the sub-picture is derived from said special or encrypted signal. If a special fee is to be paid for a decryption or descrambling within the specific decoder said fee has to be paid only once because for the video recorder connected to the receiver on the one hand and the specific decoding for the PIP processor on the other hand only one specific decoder is needed.

Said special signal preferably is a MAC signal. It may also be an encrypted or scrambled signal being not a MAC signal, e.g. an encrypted PAL, SECAM or NTSC signal. The special signal also may be a MAC signal being additionally encrypted or scrambled.

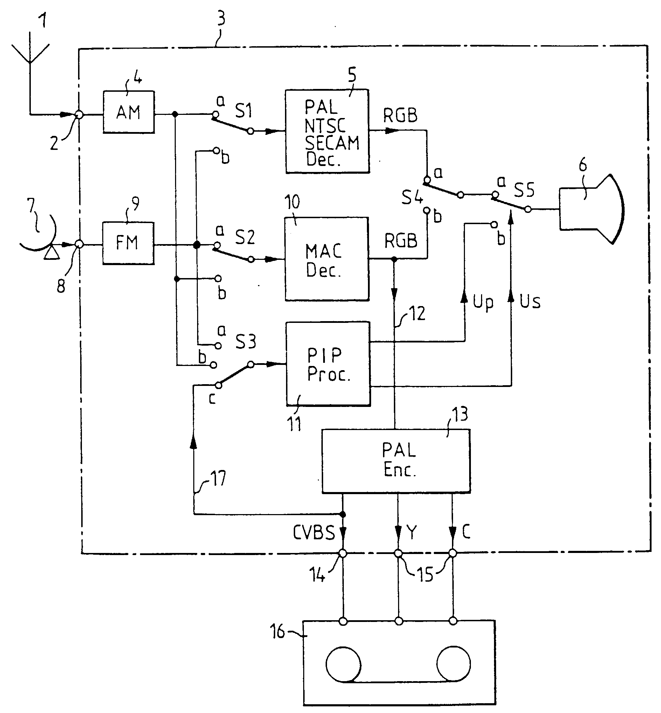

In order that the invention may more readily be understood, a description is now given by way of example only, reference being made to the drawing. The single Figure of the drawing shows in simplified form a television receiver with means for additionally handling a MAC signal and provided for PIP reproduction. The Figure shows signals applied to the receiver from two antennae, one of them being a satellite dish, the other is shown as an antenna for terrestrial reception. This is by way of an example only, and the signals can orginate from radiating or conducting sources, such as satellites, terrestrial transmitters, cable systems, video recorders using tapes or discs, these sources being used in any combination.

Within the Figure a first antenna 1 for terrestrial reception is connected to input terminal 2 of television receiver 3. Terminal 2 is connected via the first AM tuner 4 and switch S1 to a decoder 5 which may be a PAL NTSC or SECAM decoder. Decoder 5 furnishes RGB signals fed via switches S4, S5 to picture tube 6 for reproduction. The normally provided video output stages before the tube 6 are not shown for case of simplification. A second antenna 7 in form of a dish for microwave reception is connected to second input terminal 8 which is connected via a second FM tuner 9 and switch S2 to a MAC decoder 10. Decoder 10 also provides RGB signals being switchable to tube 6 via switches S4, S5. Switches S1, S2 are arranged to connect each of signals at terminals 2, 8 to decoders 5 or 10 in correspondence with the form of signal received by antennas 1 or 7.

Outputs of tuners 4, 9 additionally are connectable to input of a PIP processor 11. Processor 11 provides a signal Up for reproduction of a small sub-picture. Processor 11 generates a so-called fast switching voltage Us actuating switch S5. During display of the sub-picture switch S5 is switched by Us into position b so that instead of signal from decoder 5 or 10 signal Up from processor 11 is inserted. For example the main picture on tube 6 is derived from a MAC signal received by antenna 7 switch S2 being in position a, switch S4 in position b and switch S5 in position a PIP processor 11 on the other hand simultaneously is fed by a signal received from antenna 1 with switch S3 being in position b.

If, however, the sub-picture made by Up shall be derived from a received MAC signal, switch 53 being in position a, then the processor 11 additionally needs to include an additional specific decoder for MAC. Said additional decoder within processor 11 is avoided in the following way.

RGB signals from MAC decoder 10 used for picture reproduction additionally are fed via leads 12 to PAL encoder 13. Encoder 13 provides at output terminal 14 a composite PAL signal CVBS and at output terminals 15 additionally a Y/C signal at different leads, Y being the luminance signal and C the chroma signal. Output terminals 14, 15 are provided for connecting a video recorder 16 thereto, alternatively to terminal 14 or to terminai 15. CVBS signal at terminal 14 is used for a normal domestic video recorder whereas terminals 15 are used for a domestic video recorder working according to the Y/C principle. Terminal 14 ordinarily being an output terminal only for connecting a video recorder thereto is fed via lead 17 to one input of switch S3. In case a received MAC signal shall be used for the sub-picture switch S3 is switched into position c so that PIP processor 11 receives the normal CVBS signal which is already MAC decoded and/or additionally descrambled within decoder 10. The specific MAC decoder 10 which may also include a decryption or descrambling circuit therefore additonally is used for providing a normal signal not MAC encoded and not encrypted for PIP processor 11.

In the example shown decoder 10 provides RGB signals. Likewise decoder 10 may provide signals in the form Y/U, V or a composite PAL video signal CVBS. Decoder 5 may likewise work for a PAL, a NTSC or a SECAM signal. In the same way encoder 13 may be instead of a PAL encoder a SECAM encoder or a NTSC encoder for connecting a video tape recorder for said signals to receiver 3.

## Claims

1. Television receiver including a PIP processor and an extra decoder for a specific coded or encrypted signal said decoder having outputs used for picture reproduction and further being connected to inputs of an encoder having Y/C and/or composite CVBS outputs being connected to output terminals of the receiver dedicated for connecting a video recorder thereto, characterized by switching means (S3) for connecting said Y/C or CVBS output (14,15) to the input of said PIP processor (11).

2. Receiver according to Claim 1, **characterized in that** said specific coded signal is a MAC signal.

3. Receiver according to Claim 2, **characterized in that** said MAC signal is an encrypted signal.

4. Receiver according to Claim 1, **characterized in that** said encoder (13) is a PAL encoder.

5. Receiver according to Claim 1, **characterized in that** said Y/C or CVBS outputs are component Y/C and/or composite CVBS outputs.

6. Receiver according to Claim 1, **characterized in that** the outputs of said decoder (10) are RGB outputs.

7. Receiver according to Claim 1, **characterized in that** the outputs of said decoder (10) are Y, UV or composite CVBS outputs.

## Patentansprüche

1. Fernsehempfänger mit einem PIP-Prozessor und einem zusätzlichen Dekoder für ein spezifisches kodiertes oder verschlüsseltes Signal, wobei der Dekoder Ausgänge hat, die zur Bildwiedergabe verwendet werden und ferner mit den Eingängen eines Kodierers verbunden sind, der Y/C- und/oder FBAS-Ausgänge hat, die mit Ausgangsanschlüssen des Empfängers verbunden sind, die für den Anschluß eines Videorecorders bestimmt sind, **gekennzeichnet durch** Schaltmittel (53) zum Verbinden des Y/C- oder des FBAS-Ausgangs (14, 15) mit dem Eingang des PIP-Prozessors (11).

2. Empfänger nach Anspruch 1, dadurch gekennzeichnet, daß das spezifische kodierte Signal ein MAC-Signal ist.

3. Empfänger nach Anspruch 2, dadurch gekennzeichnet, daß das MAC-Signal ein verschlüsseltes Signal ist.

4. Empfänger nach Anspruch 1, dadurch gekennzeichnet, daß der Kodierer (13) ein PAL-Kodierer ist.

5. Empfänger nach Anspruch 1, dadurch gekennzeichnet, daß die Y/C- oder FBAS-Ausgänge Y/C-Komponenten-Ausgänge und/oder FBAS-zusammengesetzte Ausgänge sind.

6. Empfänger nach Anspruch 1, dadurch gekennzeichnet, daß die Ausgänge des Dekoders (10) RGB-Ausgänge sind.

7. Empfänger nach Anspruch 1, dadurch gekennzeichnet, daß die Ausgänge des Dekoders (10) Y-, UV- oder FBAS-Ausgänge sind.

## Revendications

1. Récepteur de télévision comportant un processeur PIP et un décodeur supplémentaire d'un signal codé ou crypté spécifique ledit décodeur ayant des sorties utilisées pour la reproduction d'image et raccordé en outre aux entrées d'un codeur ayant des sorties Y/C et/ou composites CVBS raccordées aux bornes de sortie du récepteur dédiées au raccordement d'un magnétoscope à celui-ci, caractérisé par un moyen de commutation (S3) servant à raccorder ladite sortie Y/C ou CVBS (14,15) à l'entrée dudit processeur PIP (11).

2. Récepteur conformément à la revendication 1, caractérisé en ce que ledit signal codé spécifique est un signal MAC.

3. Récepteur conformément à la revendication 2, caractérisé en ce que ledit signal MAC est un signal crypté.

4. Récepteur conformément à la revendication 1, caractérisé en ce que ledit codeur (13) est un codeur PAL.

5. Récepteur conformément à la revendication 1, caractérisé en ce que lesdites sorties Y/C ou CVBS sont des sorties de composantes Y/C et /ou composites CVBS.

6. Récepteur conformément à la revendication 1, caractérisé en ce que les sorties dudit décodeur (10) sont des sorties RVB.

7. Récepteur conformément à la revendication 1, caractérisé en ce que les sorties dudit décodeur (10) sont des sorties Y, UV ou composites CVBS.
